# EUROPÄISCHE PATENTSCHRIFT

(11) **EP 3 018 031 B1**
(45) Veröffentlichungstag und Bekanntmachung des Hinweises auf die Patenterteilung: **17.03.2021**
(21) Anmeldenummer: 15003099.7
(22) Anmeldetag: 29.10.2015
(51) Int. Cl.: B60W 50/14, B60W 10/04, B60W 10/10, B60W 10/184, B60W 30/09, B60W 30/14, B60W 30/18, B60W 40/06, G01S 13/86, B60T 7/22, G01S 7/481, B60W 30/16, G01S 17/93

(54) **EINRICHTUNG ZUR ADAPTIVEN GESCHWINDIGKEITS- UND ABSTANDSREGELUNG FÜR EIN KRAFTFAHRZEUG, ZUGEHÖRIGES KRAFTFAHRZEUG UND ZUGEHÖRIGES VERFAHREN**
DEVICE FOR ADAPTIVE SPEED AND DISTANCE CONTROL FOR A MOTOR VEHICLE, ASSOCIATED MOTOR VEHICLE AND RELATED METHOD
DISPOSITIF DE RÉGLAGE D'ÉCARTEMENT ET DE VITESSE ADAPTATIVE POUR UN VÉHICULE, VÉHICULE ASSOCIÉ ET PROCÉDÉ ASSOCIÉ

(30) Priorität: 08.11.2014 DE 102014016578
(43) Veröffentlichungstag der Anmeldung: 11.05.2016
(73) Patentinhaber: AUDI AG, 85045 Ingolstadt (DE)
(72) Erfinder: Raaijmakers, Marvin, DE - 85057 Ingolstadt (DE)
(74) Vertreter: Thielmann, Frank

(56) Entgegenhaltungen:
- DE-A1-102004 005 229
- DE-A1-102005 002 719
- DE-A1-102007 036 417
- US-A- 5 455 669
- US-A1- 2010 114 416

## Beschreibung

Die Erfindung betrifft eine Einrichtung zur adaptiven Geschwindigkeits- und Abstandsregelung für ein Kraftfahrzeug, mit einem Sensor zum Erfassen des Abstands zu einem vorausfahrenden Fahrzeug, wobei die Einrichtung dazu ausgebildet ist, eine eingestellte Geschwindigkeit durch einen Eingriff in eine Motorsteuerung und/oder eine Getriebesteuerung und/oder eine Bremssystemsteuerung unter Berücksichtigung des erfassten Abstands zu regeln, wobei die Einrichtung dazu ausgebildet ist, mittels des Sensors zum Erfassen des Abstands eine sich auf der Trajektorie vor dem Kraftfahrzeug befindende Mittelinsel eines Kreisverkehrs zu detektieren und eine Aktion zum Vermeiden einer gefährlichen Situation auszulösen, wobei die Einrichtung einen Algorithmus aufweist, der dazu ausgebildet ist, eine Kante der Mittelinsel des Kreisverkehrs zu detektieren.

Eine derartige Einrichtung ist ein Fahrerassistenzsystem, das auch als "Adaptive Cruise Control (ACC)" bezeichnet wird. Dabei wird mit einem Sensor der Abstand zu einem vorausfahrenden Fahrzeug gemessen und eine vom Fahrer vorgegebene Geschwindigkeit automatisch eingehalten, sofern dies bei Berücksichtigung der Straßenverhältnisse, des Verkehrs und gegebenenfalls weiterer Randbedingungen möglich ist. Zum vorausfahrenden Fahrzeug wird dabei durch das Fahrerassistenzsystem ein möglichst gleichbleibender Abstand eingehalten. Der Fahrer kann die Systemdynamik in mehreren Stufen einstellen bzw. anpassen. Bei eingeschalteter Adaptive Cruise Control ist nach wie vor der Fahrer für die Überwachung der Geschwindigkeit und des Abstands zum Vordermann verantwortlich, da das ACC nicht auf ortsfeste Objekte reagiert.

Aus der DE 10 2005 002 719 A1 ist ein Verfahren zur Kursprädiktion in Fahrerassistenzsystemen für Kraftfahrzeuge bekannt. Bei diesem Verfahren werden unterschiedliche Umfeldinformationen mittels Sensoren erfasst und als Rohdaten berücksichtigt, die aus Linienabschnitten zusammengesetzt sind, wobei ein Linienabschnitt durch ein Polynom repräsentiert wird.

Die DE 10 2006 030 178 A1 schlägt ein Verfahren vor, das zum Erkennen von Bodenschwellen geeignet ist. Dabei wird ein optischer Sensor eingesetzt, aufgenommene Bilddaten werden einem Bildverarbeitungsalgorithmus erzogen, um zu ermitteln, ob es sich bei einem erfassten Objekt um eine Bodenschwelle handelt oder nicht.

Aus der DE 10 2013 217 430 A1 ist ein Fahrerassistenzsystem für ein Kraftfahrzeug bekannt, bei dem mittels Sensoren Objekte vor dem Fahrzeug und seitlich davon erfasst werden. Durch eine Auswertung wird ein Fahrweg für das Fahrzeug so ausgewählt, dass ein Konflikt mit den erfassten Objekten vermieden wird.

Die Druckschrift US 2010/0114416 A1 offenbart ein Verfahren zur Informationsbereitstellung an ein autonomes Kraftfahrzeug. Durch eine Laserscanner des Kraftfahrzeugs werden Entfernungs- und Intensitätsdaten gewonnen. Ein abstandsbasiertes Verarbeitungsmodul verarbeitet Daten eines einzelnen Entfernungsscans, um eine entfernungsbasierte Klassifikation durchzuführen. Zudem wird auf Basis empfangener Intensitäten eine Klassifikation durchgeführt. Die Klassifikationen werden fusioniert.

Das Dokument DE 10 2007 036 417 A1 lehrt ein Verfahren zum Betreiben eines Abstandsregelsystems für Fahrzeuge. Für einen vorausliegenden Streckenbereich wird vorausschauend ein Ereignisbereich bestimmt, der einem Abstandsbereich vor einem eine potentielle Gefahrenstelle markierenden topologischen Ereignis entspricht. In dem Ereignisbereich wird die Durchführung von beschleunigenden Systemeingriffen unterdrückt. Handelt es sich bei dem topologischen Ereignis um einen Kreisverkehr, kann die Geschwindigkeit des Fahrzeugs auf eine Geschwindigkeit abgesenkt werden, die der Geschwindigkeit eines Zielobjekts der Abstandsregelung unmittelbar vor dem Zielverlust entspricht.

Eine mögliche Implementation einer laserbasierten Entfernungsmessung ist dem Dokument US 5455669 A zu entnehmen. Diese Vorrichtung kann beispielsweise in einem selbstnavigierendem Fahrzeug genutzt werden.

Die Druckschrift DE 10 2004 005 229 A1 schlägt ein Abstandsregelsystem für Kraftfahrzeuge vor. Dieses ist dazu eingerichtet, eine Übernahmeaufforderung an einen Fahrer auszugeben, wenn ein Regelungsziel nicht einzuhalten ist.

Obwohl sich Einrichtungen zur adaptiven Geschwindigkeit- und Abstandsregelung für ein Kraftfahrzeug, insbesondere ACC-Fahrerassistenzsysteme, bewährt haben, können unter ungünstigen Umständen gefährliche Situationen auftreten, da die Einrichtung bestimmte Objekte, die sich entlang des Fahrwegs befinden, nicht erkennen kann bzw. nicht darauf reagiert. Dazu zählt beispielsweise ein Kreisverkehr. Ein Kreisverkehr ist ein Verkehrsknotenpunkt mit einer Kreisfahrbahn und einer Mittelinsel. Verkehrsteilnehmer, die sich auf der Kreisfahrbahn befinden, haben Vorfahrt vor einfahrenden Verkehrsteilnehmern. Vor dem Einfahren in die Kreisfahrbahn des Kreisverkehrs muss sich ein Fahrer zunächst Gewissheit darüber verschaffen, ob er in den Kreisverkehr einfahren kann oder ob er sein Fahrzeug zunächst abbremsen muss, gegebenenfalls bis zum Stillstand, um vorfahrtberechtigte Fahrzeuge passieren zu lassen. Selbst wenn kein vorfahrtberechtigter Verkehr vorhanden ist, ist es zumeist erforderlich, die Geschwindigkeit des Fahrzeugs zu reduzieren, um in die Kreisfahrbahn des Kreisverkehrs einfahren zu können.

Ein herkömmliches ACC, das heißt eine herkömmliche Einrichtung zur adaptiven Geschwindigkeits- und Abstandsregelung, reagiert jedoch nicht auf einen Kreisverkehr, der sich vor dem Fahrzeug befindet. Eine gefährliche Situation kann somit dann eintreten, wenn der Fahrer irrtümlicherweise davon ausgeht, dass das ACC den vor ihm liegenden Kreisverkehr berücksichtigen und entsprechend abbremsen wird.

Der Erfindung liegt daher die Aufgabe zugrunde, eine verbesserte Einrichtung zur adaptiven Geschwindigkeits- und Abstandsregelung anzugeben, die in der Lage ist, auf einen Kreisverkehr zu reagieren, der sich auf dem Fahrweg befindet.

Die Aufgabe wird durch eine Einrichtung gemäß Anspruch 1 gelöst.

Anders als ein herkömmliches ACC-System ist die erfindungsgemäße Einrichtung in der Lage, einen sich vor dem Fahrzeug befindenden Kreisverkehr zu detektieren und eine Aktion auszulösen, durch die das Entstehen einer gefährlichen Situation verhindert wird. Insbesondere wird durch die erfindungsgemäße Einrichtung verhindert, dass eine gefährliche Situation dadurch entsteht, dass ein Fahrer den vor ihm liegenden Kreisverkehr ignoriert, da er davon ausgeht, dass die Einrichtung den Kreisverkehr berücksichtigt.

Bei der erfindungsgemäßen Einrichtung kann es vorgesehen sein, dass die ausgelöste Aktion das Ausgeben einer Information oder einer Warnung an einen Fahrer umfasst. Durch die ausgegebene Information oder Warnung wird dem Fahrer vermittelt, dass eine gefährliche Situation droht, so dass der Fahrer eingreifen kann. Der Fahrer kann beispielsweise einen Bremsvorgang oder ein Lenkmanöver oder eine Kombination davon durchführen. Durch die ausgegebene Information oder Warnung wird dem Fahrer vermittelt, dass er selbst eingreifen muss, um eine ansonsten drohende gefährliche Situation zu vermeiden.

Gemäß einer Weiterbildung der Erfindung kann es vorgesehen sein, dass die ausgelöste Aktion die Aufforderung an den Fahrer umfasst, die Steuerung des Kraftfahrzeugs zu übernehmen. Dadurch wird die Rollenverteilung bei der Steuerung des Fahrzeugs geändert und von dem Fahrerassistenzsystem wieder zurück an den Fahrer gegeben. Der Fahrer weiß dann, dass er ab sofort allein für die Steuerung des Fahrzeugs verantwortlich ist.

Es liegt auch im Rahmen der Erfindung, dass die ausgelöste Aktion das Abbremsen des Kraftfahrzeugs auf eine ein Passieren des Kreisverkehrs ermöglichende Geschwindigkeit umfasst. Da beim Einfahren in den Kreisverkehr eine Rechtskurve zu fahren ist, kann durch die erfindungsgemäße Einrichtung ein Abbremsen des Kraftfahrzeugs auf eine dafür geeignete Geschwindigkeit ausgelöst werden. In Abhängigkeit von den örtlichen Verhältnissen, insbesondere in Abhängigkeit von Sichtverhältnissen, Straßenbreite sowie in Abhängigkeit vom Vorhandensein weiterer Fahrzeuge kann die Geschwindigkeit, auf die das Kraftfahrzeug abgebremst wird, unterschiedlich sein. Die Geschwindigkeit wird jeweils so niedrig gewählt, dass ein gefahrloses Einfahren in den Kreisverkehr möglich ist.

Im Rahmen der Erfindung kann es auch vorgesehen sein, dass die ausgelöste Aktion das Abbremsen des Kraftfahrzeugs bis zum Stillstand vor oder an einer Haltelinie des Kreisverkehrs umfasst. Ein Abbremsen bis zum Stillstand ist insbesondere dann erforderlich, wenn sich vorfahrtberechtigte Kraftfahrzeuge auf der Kreisfahrbahn befinden.

Die erfindungsgemäße Einrichtung kann so ausgebildet sein, dass das Detektieren der Mittelinsel des Kreisverkehrs das Erfassen wenigstens eines geometrischen Parameters und das Vergleichen des geometrischen Parameters mit gespeicherten Daten und/oder modellierten Daten umfasst. Dabei wird von der Tatsache Gebrauch gemacht, dass eine Mittelinsel typische geometrische Parameter aufweist, durch die sie charakterisiert und detektiert werden kann. Vorzugsweise kann eine kreissegmentförmige Kante einer Mittelinsel als derartiger geometrischer Parameter verwendet werden. Eine derartige kreissegmentförmige Kante dient somit als Erkennungszeichen einer Mittelinsel. Dabei ist es vorteilhaft, dass praktisch alle Mittelinseln von Kreisverkehren eine derartige kreissegmentförmige Kante aufweisen, die durch einen Algorithmus aus Daten, die von dem Sensor erfasst worden sind, extrahiert und somit detektiert werden kann. Auf diese Weise kann eine sich vor dem Fahrzeug befindende Mittelinsel eines Kreisverkehrs zuverlässig identifiziert und von anderen ortsfesten Objekten wie beispielsweise ein Bordstein, eine Leitplanke oder eine Verkehrsinsel unterschieden werden. Die Auswertung zum Detektieren einer Kante einer Mittelinsel erfolgt mittels eines speziellen Algorithmus'.

Daneben betrifft die Erfindung ein Kraftfahrzeug. Das erfindungsgemäße Kraftfahrzeug weist eine Einrichtung der beschriebenen Art auf.

Daneben betrifft die Erfindung ein Verfahren gemäß Anspruch 10.

Bei dem erfindungsgemäßen Verfahren wird es bevorzugt, dass zum Detektieren der Mittelinsel des Kreisverkehrs wenigstens ein geometrischer Parameter durch Auswerten von Sensordaten erfasst und mit gespeicherten Daten und/oder modellierten Daten verglichen wird.

Vorzugsweise wird bei dem erfindungsgemäßen Verfahren eine kreissegmentförmige Kante einer Mittelinsel als geometrischer Parameter verwendet.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Verkehrssituation, bei der die erfindungsgemäße Einrichtung eingesetzt wird;
- Fig. 2: eine Darstellung eines Bereichs vor dem Kraftfahrzeug;
- Fig. 3: eine weitere Verkehrssituation, bei der die erfindungsgemäße Einrichtung eingesetzt wird;
- Fig. 4: eine weitere Verkehrssituation, bei der die erfindungsgemäße Einrichtung eingesetzt wird;
- Fig. 5: ein Kraftfahrzeug mit einer erfindungsgemäßen Einrichtung;
- Fig. 6: eine Draufsicht von punktförmigen Laserscannerdaten im Bereich der Mittelsinsel eines Kreisverkehrs;
- Fig. 7: Laserscannerdaten einer einzigen horizontalen Kennebene eines Laserscanners;
- Fig. 8: die in Fig. 7 gezeigten Laserscannerdaten mit extrahierten kreisförmigen Objekten; und
- Fig. 9: der durch einen Algorithmus identifizierte Kreisverkehr.

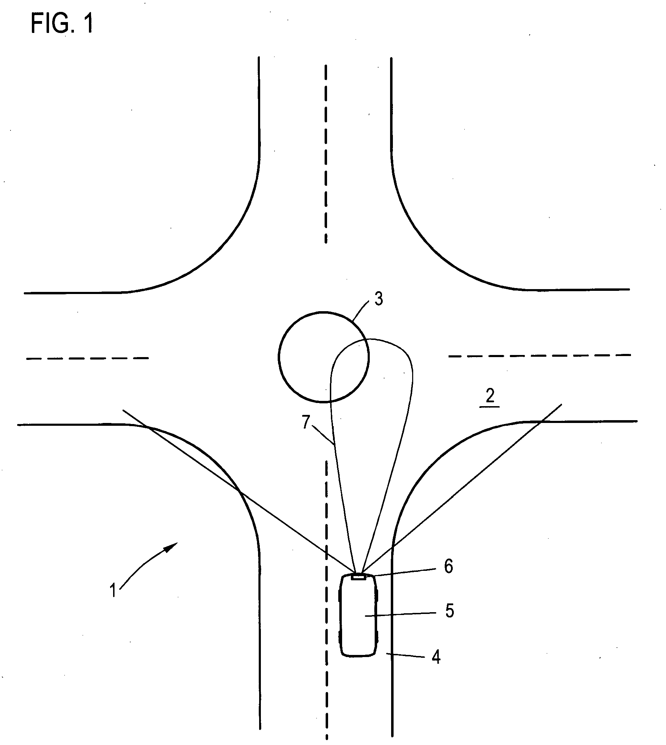

Fig. 1 ist eine Draufsicht und zeigt einen Kreisverkehr 1 mit insgesamt vier Einfahrten, einer Kreisfahrbahn 2 und einer Mittelinsel 3. Auf einer Fahrbahn 4, die zum Kreisverkehr 1 führt, befindet sich ein Kraftfahrzeug 5, das eine Einrichtung zur adaptiven Geschwindigkeits- und Abstandsregelung aufweist. Mittels eines schematisch dargestellten Laserscanner 6 wird ein Bereich 7 vor dem Kraftfahrzeug 1 erfasst. Mittels des Laserscanners 6 kann ein gegebenenfalls vorhandenes, vorausfahrendes Fahrzeug erfasst werden. Die Einrichtung zur adaptiven Geschwindigkeits- und Abstandsregelung ist so ausgebildet, dass im Falle eines vorausfahrenden Fahrzeugs der Abstand zwischen dem Kraftfahrzeug 5 und dem vorausfahrenden Fahrzeug geregelt wird. Dazu greift die Einrichtung in eine Motorsteuerung, eine Getriebesteuerung und eine Bremssystemsteuerung des Kraftfahrzeugs 5 ein. Der Fahrer kann an der Einrichtung zur adaptiven Geschwindigkeits- und Abstandsregelung eine gewünschte Geschwindigkeit einstellen, die Einrichtung versucht dann, diese gewünschte Geschwindigkeit einzuhalten. Bei einem detektierten vorausfahrenden Fahrzeug ist es jedoch unter Umständen erforderlich, die aktuelle Geschwindigkeit auf eine niedrigere Geschwindigkeit als die eingestellte, gewünschte Geschwindigkeit zu verringern.

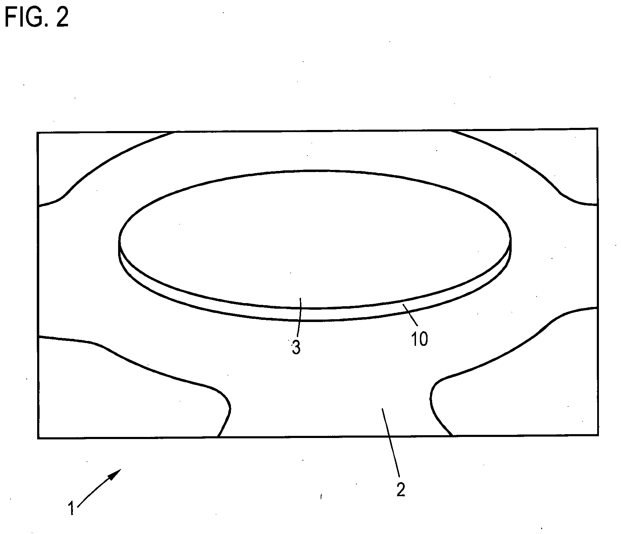

Fig. 2 ist eine Darstellung eines Kreisverkehrs, der sich in Fahrtrichtung vor dem Kraftfahrzeug befindet, wenn es sich dem Kreisverkehr nähert. Der in Fig. 2 gezeigte Kreisverkehr 1 weist bestimmte markante geometrische Formen auf. Insbesondere umfasst jeder Kreisverkehr die Mittelinsel 3, die eine Kante 10 aufweist, die eine Grenze zwischen der Mittelinsel 3 und der Kreisfahrbahn 2 bildet. Diese Kante 10 dient somit als geometrischer Parameter, der durch eine Auswertung der von dem Laserscanner 6 erstellten erfassten Daten detektiert werden kann. Das Extrahieren eines derartigen geometrischen Parameters aus den Daten erfolgt mittels eines speziellen Algorithmus. Das Detektieren der Mittelinsel 3 des Kreisverkehrs 1 erfolgt, indem durch Auswerten der erfassten Daten ein geometrischer Parameter, nämlich die Kante 10, erfasst und mit gespeicherten Daten oder modellierten Daten verglichen wird. Kanten von Mittelinseln eines Kreisverkehrs zeichnen sich durch eine typische Form aus, durch die Erkennung einer derartigen Kante kann somit das Vorhandensein einer Mittelinsel eines Kreisverkehrs detektiert werden.

Nachdem die Einrichtung zur adaptiven Geschwindigkeits- und Abstandsregelung durch die Auswertung der Daten des Laserscanners 6 den sich auf der Trajektorie vor dem Kraftfahrzeug 5 befindenden Kreisverkehr 1 detektiert hat, löst sie eine Aktion aus, um eine gefährliche Situation zu vermeiden.

In dem dargestellten Ausführungsbeispiel wird eine Warnung in Form eines optischen und eines akustischen Signals an den Fahrer ausgegeben. Durch diese Warnung wird dem Fahrer die Information vermittelt, dass die Steuerung des Kraftfahrzeugs 5 wieder an ihn übergeben wird. Dementsprechend kann der Fahrer selbst in die Steuerung eingreifen und beispielsweise die Bremse betätigen.

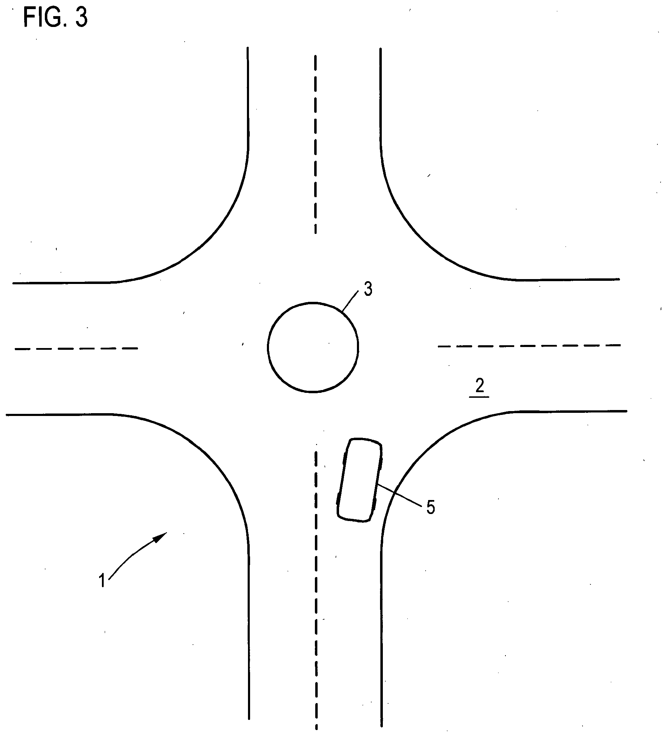

Fig. 3 ist eine ähnliche Darstellung wie Fig. 1 und zeigt das Kraftfahrzeug 5 beim Einfahren in den Kreisverkehr 1. Die Einrichtung zur adaptiven Geschwindigkeits- und Abstandsregelung hat zuvor geprüft, ob sich im Kreisverkehr 1 vorfahrtberechtigte Fahrzeuge befinden. Da keine derartigen Fahrzeuge vorhanden sind, kann das Kraftfahrzeug 5 in die Kreisfahrbahn 2 einfahren. Die Einrichtung reduziert dazu die Geschwindigkeit des Kraftfahrzeugs 5 durch einen Eingriff in das Bremssystem auf eine Geschwindigkeit, die ein Passieren des Kreisverkehrs 1 ermöglicht. Dementsprechend passiert das Kraftfahrzeug 5 den Kreisverkehr 1 unter der Steuerung der Einrichtung, ohne dass der Fahrer eingreifen muss.

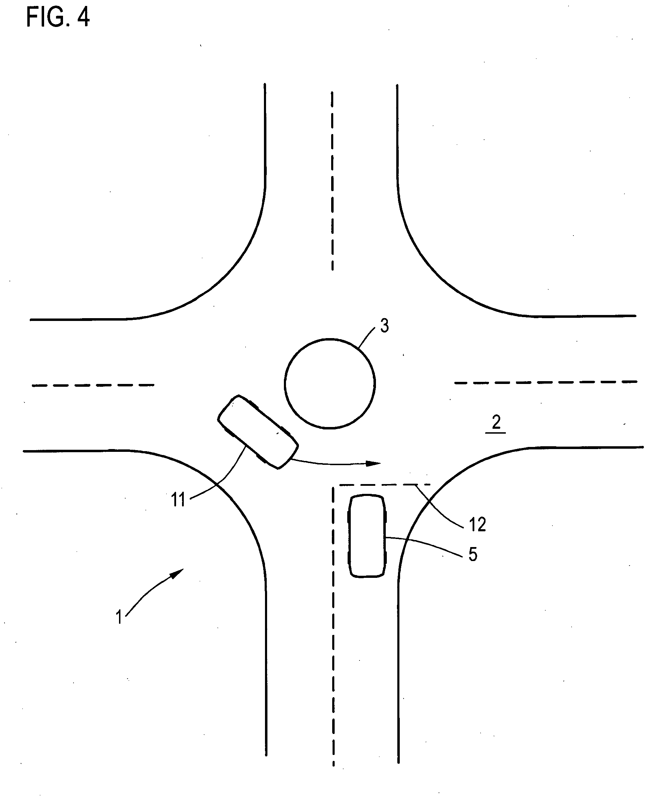

Fig. 4 ist eine ähnliche Darstellung wie Fig. 1 und Fig. 3 und zeigt eine Verkehrssituation, bei der sich im Kreisverkehr 1 ein weiteres Kraftfahrzeug 11 befindet. Da sich dieses bereits auf der Kreisfahrbahn 2 befindet, ist es bevorfahrtberechtigt. Dementsprechend besteht die von der Einrichtung zur adaptiven Geschwindigkeits- und Abstandsregelung durchgeführte Aktion in diesem Fall aus einem Abbremsen des Kraftfahrzeugs 5 bis zum Stillstand vor einer Haltelinie 12 des Kreisverkehrs 1. Diese ausgelöste Aktion ist eine Folge der Detektion und Erkennung des Kreisverkehrs 1, genauer gesagt der Erkennung der Mittelinsel 3 anhand der Kante 10, die unter Bezugnahme auf Fig. 1 beschrieben wurde.

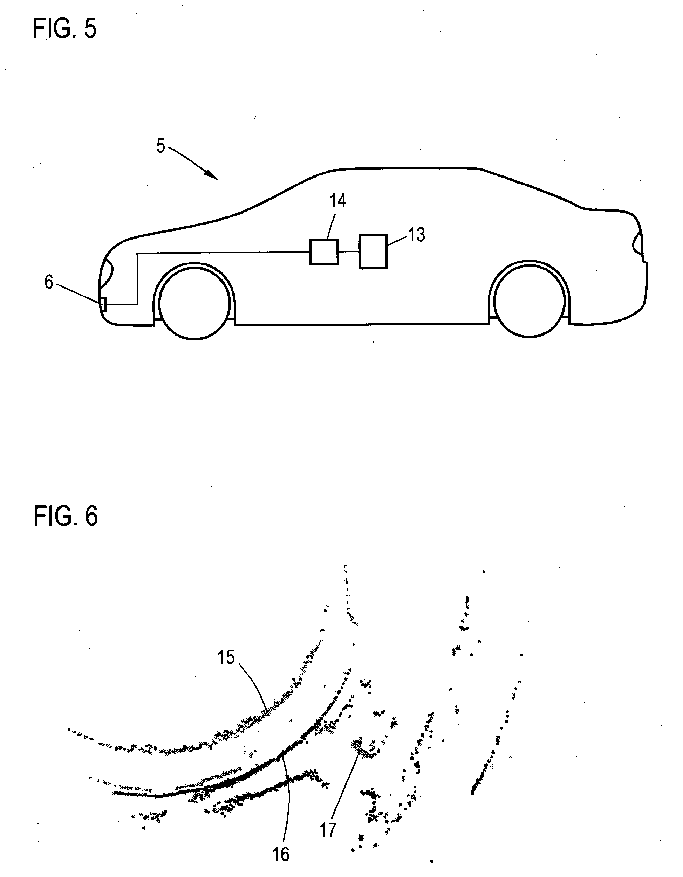

Fig. 5 ist eine schematische Darstellung und zeigt das Kraftfahrzeug 5 sowie die wesentlichen Komponenten einer Einrichtung 13 zur adaptiven Geschwindigkeits- und Abstandsregelung.

Das Kraftfahrzeug 5 weist den an der Front des Kraftfahrzeugs 5 angeordneten Laserscanner 6 auf, der nach vorne ausgerichtet ist und somit Objekte, insbesondere ein vorausfahrendes Fahrzeug oder einen anderen Verkehrsteilnehmer, vor dem Kraftfahrzeug 5 erfassen kann. Der Laserscanner 6 ist mit einer Auswertungseinheit 14 gekoppelt. In der Auswertungseinheit 14 wird der beschriebene Algorithmus durchgeführt, um einen geometrischen Parameter, insbesondere eine Kante der Mittelinsel eines Kreisverkehrs aus den von dem Laserscanner 6 erfassten Daten zu extrahieren.

Die Einrichtung 13 zur adaptiven Geschwindigkeits- und Abstandsregelung ist in ein Fahrerassistenzsystem mit ACC-Funktion integriert.

Fig. 6 zeigt beispielhaft von dem Laserscanner 6 erfasste Daten, der Laserscanner 6 dient dabei als Sensor zum Erfassen des Abstands. Obwohl die Laserscannerdaten Rauschen aufweisen, erkennt man, dass die punktförmigen Laserscannerdaten eine gewisse Struktur aufweisen. In der Draufsicht von Fig. 6 erkennt man mehrere Kreissegmente 15, 16 und somit die Position der Mittelinsel des Kreisverkehrs. Zusätzlich zeigen die punktförmigen Laserscannerdaten die Außenkontur eines Fremdfahrzeugs 17. In Fig. 6 sind die Laserscannerdaten mehrerer horizontaler Scanebenen überlagert dargestellt. Da der Laserscanner den Bereich vor dem Kraftfahrzeug in mehreren horizontalen und voneinander beabstandeten Scanebenen erfasst, können durch die Interpretation der verschiedenen Scanebenen weitere Informationen gewonnen werden.

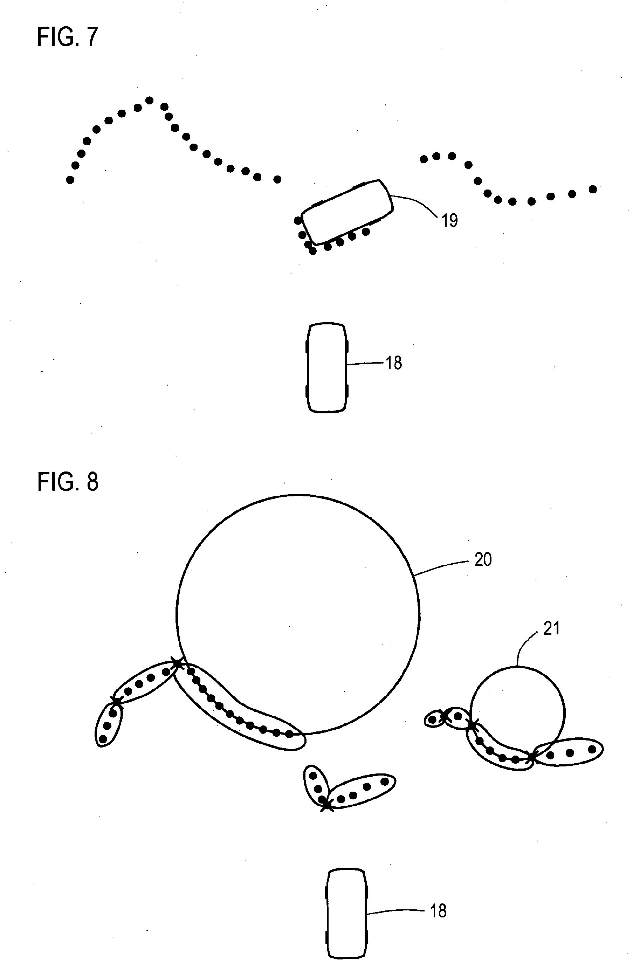

Fig. 7 ist eine ähnliche Darstellung wie Fig. 6, wobei lediglich eine einzige horizontale Scanebene, die von dem Laserscanner 6 erfasst wurde, dargestellt ist. Zusätzlich ist ein Kraftfahrzeug 18 (Egofahrzeug) dargestellt. Die Laserscannerdaten entsprechen einer Menge von Punkten, die als Koordinaten interpretiert werden können. Die vor dem Kraftfahrzeug 18 erfassten Punkte entsprechen der sichtbaren Außenkontur eines Fremdfahrzeugs 19. Aus den übrigen Punkten beziehungsweise den aus Punkten bestehenden Linien extrahiert ein Algorithmus kreisförmige Objekte.

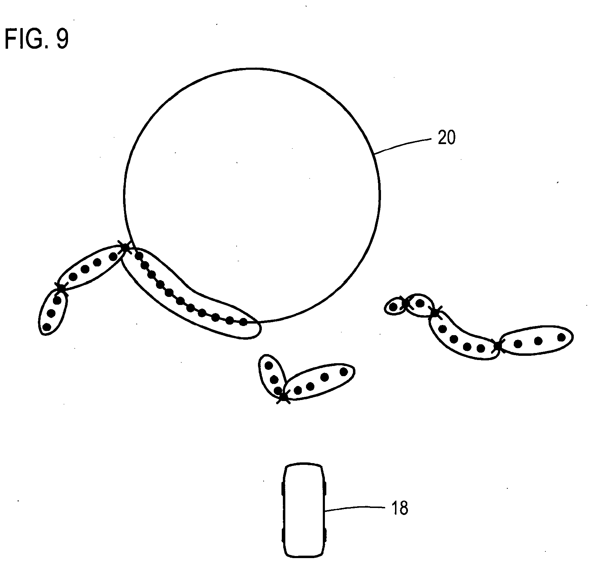

In Fig. 8 ist dargestellt, dass der Algorithmus versucht, mehrere Punkte, die sich auf einem Kreissegment befinden könnten, zu einer Gruppe zusammenzufassen. Wenn eine Gruppe von Punkten eine gewisse Größe aufweist, versucht der Algorithmus ein kreisförmiges Objekt 20, 21 zu erkennen. In dem dargestellten Ausführungsbeispiel würden die Gruppen von Punkten zu zwei kreisförmigen Objekten 20, 21 passen. Anschließend werden nicht plausible Objekte herausgefiltert. Dazu kann entweder auf eine gespeicherte Karte zurückgegriffen werden, die zumeist ohnehin schon in einem Navigationsgerät vorhanden ist. Alternativ oder zusätzlich können auch Informationen über den Aufbau von Kreisverkehren herangezogen werden. Typischerweise nähert sich das Kraftfahrzeug 18 einem Kreisverkehr radial, etwas versetzt vom Mittelpunkt beziehungsweise das Kraftfahrzeug 18 steuert einen Punkt zwischen dem Mittelpunkt des Kreisverkehrs und dessen rechtem Ende an. Somit ist für die Einrichtung erkennbar, dass das kreisförmige Objekt 21 nicht der gesuchte Kreisverkehr beziehungsweise die gesuchte Mittelinsel sein kann. Dementsprechend wird das kreisförmige Objekt 21 nicht weiter berücksichtigt. Somit bleibt - wie in Fig. 9 gezeigt ist - lediglich das kreisförmige Objekt 20 übrig, das als Mittelinsel eines vor dem Kraftfahrzeug 18 liegenden Kreisverkehrs identifiziert wird. Anhand des Radius beziehungsweise des Durchmessers des kreisförmigen Objekts 20 und dem Abstand zum Kraftfahrzeug 18 kann eine passende Geschwindigkeit für das Einfahren in den Kreisverkehr festgelegt werden.

## Patentansprüche

1. Einrichtung (13) zur adaptiven Geschwindigkeits- und Abstandsregelung für ein Kraftfahrzeug (5), mit einem Sensor zum Erfassen des Abstands zu einem vorausfahrenden Fahrzeug, wobei die Einrichtung (13) dazu ausgebildet ist, eine eingestellte Geschwindigkeit durch einen Eingriff in eine Motorsteuerung und/oder eine Getriebesteuerung und/oder eine Bremssystemsteuerung unter Berücksichtigung des erfassten Abstands zu regeln, wobei die Einrichtung (13) dazu ausgebildet ist, mittels des Sensors zum Erfassen des Abstands eine sich auf der Trajektorie vor dem Kraftfahrzeug (5) befindende Mittelinsel (3) eines Kreisverkehrs (1) zu detektieren und eine Aktion zum Vermeiden einer gefährlichen Situation auszulösen, wobei die Einrichtung (13) einen Algorithmus aufweist, der dazu ausgebildet ist, eine Kante der Mittelinsel (3) des Kreisverkehrs (1) zu detektieren,
**dadurch gekennzeichnet,**
**dass** der Algorithmus dazu ausgebildet ist, die Kante der Mittelinsel (3) zu detektieren, indem mehrere von einem Laserscanner (6) erfasste Punkte einer einzigen horizontalen Scanebene, die sich auf einem jeweiligen Kreissegment befinden, zu einer jeweiligen Gruppe zusammengefasst werden, wonach, wenn die jeweilige Gruppe eine gewisse Größe aufweist, der Algorithmus versucht, ein kreisförmiges Objekt (20, 21) zu erkennen, das als die Mittelinsel (3) identifiziert wird.

2. Einrichtung nach Anspruch 1,
**dadurch gekennzeichnet,**
**dass** die ausgelöste Aktion das Ausgeben einer Information oder einer Warnung an einen Fahrer umfasst.

3. Einrichtung nach Anspruch 1 oder 2,
**dadurch gekennzeichnet,**
**dass** die ausgelöste Aktion die Aufforderung an einen Fahrer umfasst, die Steuerung des Kraftfahrzeugs (5) zu übernehmen.

4. Einrichtung nach einem der vorangehenden Ansprüche,
**dadurch gekennzeichnet,**
**dass** die ausgelöste Aktion das Abbremsen des Kraftfahrzeugs (5) auf eine ein Passieren des Kreisverkehrs (1) ermöglichende Geschwindigkeit umfasst.

5. Einrichtung nach einem der vorangehenden Ansprüche,
**dadurch gekennzeichnet,**
**dass** die ausgelöste Aktion das Abbremsen des Kraftfahrzeugs (5) bis zum Stillstand vor oder an einer Haltelinie (12) des Kreisverkehrs (1) umfasst.

6. Einrichtung nach einem der vorangehenden Ansprüche **dadurch gekennzeichnet,**
**dass** das Detektieren der Mittelinsel (3) des Kreisverkehrs (1) das Erfassen wenigstens eines geometrischen Parameters und das Vergleichen des geometrischen Parameters mit gespeicherten Daten und/oder modellierten Daten umfasst.

7. Einrichtung nach Anspruch 6,
**dadurch gekennzeichnet, dass** der wenigstens eine geometrische Parameter eine kreissegmentförmige Kante (10) der Mittelinsel (3) ist.

8. Kraftfahrzeug (5), umfassend eine Einrichtung (13) nach einem der Ansprüche 1 bis 7.

9. Verfahren für den Betrieb einer Einrichtung (13) zur adaptiven Geschwindigkeits- und Abstandsregelung für ein Kraftfahrzeug (5), mit einem Sensor zum Erfassen des Abstands zu einem vorausfahrenden Fahrzeug, wobei die Einrichtung (13) eine eingestellte Geschwindigkeit durch einen Eingriff in eine Motorsteuerung und/oder eine Getriebesteuerung und/oder eine Bremssystemsteuerung unter Berücksichtigung des erfassten Abstands regelt, wobei die Einrichtung (13) mittels des Sensors zum Erfassen des Abstands eine sich auf der Trajektorie vor dem Kraftfahrzeug (5) befindende Mittelinsel (3) eines Kreisverkehrs (1) detektiert und eine Aktion zum Vermeiden einer gefährlichen Situation auslöst, wobei die Einrichtung (13) einen Algorithmus aufweist, der eine Kante der Mittelinsel (3) des Kreisverkehrs (1) detektiert, **dadurch gekennzeichnet,**
**dass** die Kante der Mittelinsel (5) durch den Algorithmus detektiert wird, indem mehrere von einem Laserscanner (6) erfasste Punkte einer einzigen horizontalen Scanebene, die sich auf einem jeweiligen Kreissegment befinden, zu einer jeweiligen Gruppe zusammengefasst werden, wonach, wenn die jeweilige Gruppe eine gewisse Größe aufweist, der Algorithmus versucht, ein kreisförmiges Objekt (20, 21) zu erkennen, das als die Mittelinsel (3) identifiziert wird.

10. Verfahren nach Anspruch 9, **dadurch gekennzeichnet,**
**dass** zum Detektieren der Mittelinsel (3) des Kreisverkehrs (1) wenigstens ein geometrischer Parameter durch Auswerten von durch den Sensor erfassten Daten detektiert und mit gespeicherten Daten und/oder modellierten Daten verglichen wird.

11. Verfahren nach Anspruch 10,
**dadurch gekennzeichnet,**
**dass** eine kreissegmentförmige Kante (10) der Mittelinsel (3) als der wenigstens eine geometrische Parameter verwendet wird.

## Claims

1. Apparatus (13) for adaptive speed and distance control for a motor vehicle (5), having a sensor for detecting the distance to a vehicle ahead, wherein the apparatus (13) is designed to control a set speed by an intervention in an engine controller and/or a transmission controller and/or a braking system controller by taking account of the detected distance, wherein the apparatus (13) is designed, by means of the sensor for detecting the distance, to detect a central island (3) of a roundabout (1) located on the trajectory ahead of the motor vehicle (5) and to trigger an action for avoiding a dangerous situation, wherein the apparatus (13) has an algorithm, which is designed to detect an edge of the central island (3) of the roundabout (1),
**characterised in that**,
the algorithm is designed to detect the edge of the central island (3), by a plurality of points of a single horizontal scanning plane detected by a laser scanner (6), which are located on a particular circular segment, being combined to form a particular group, whereupon, when the particular group has a certain size, the algorithm attempts to detect a circular object (20, 21), which is identified as the central island (3).

2. Apparatus according to claim 1, **characterised in that** the action triggered comprises issuing information or a warning to a driver.

3. Apparatus according to claim 1 or 2, **characterised in that** the action triggered comprises inviting a driver to take control of the motor vehicle (5).

4. Apparatus according to any of the preceding claims, **characterised in that** the action triggered comprises slowing the motor vehicle (5) to a speed enabling the roundabout (1) to be navigated.

5. Apparatus according to any of the preceding claims, **characterised in that** the action triggered comprises slowing the motor vehicle (5) to a stop before or at a stop line (12) of the roundabout (1).

6. Apparatus according to any of the preceding claims, **characterised in that** detecting the central island (3) of the roundabout (1) comprises detecting at least one geometric parameter and comparing the geometric parameter with stored data and/or modelled data.

7. Apparatus according to claim 6, **characterised in that** the at least one geometric parameter is a circular segment-shaped edge (10) of the central island (3).

8. Motor vehicle (5), comprising an apparatus (13) according to any of claims 1 to 7.

9. Method for operating an apparatus (13) for adaptive speed and distance control for a motor vehicle (5), having a sensor for detecting the distance to a vehicle ahead, wherein the apparatus (13) controls a set speed by an intervention in an engine controller and/or a transmission controller and/or a braking system controller by taking account of the detected distance, wherein, by means of the sensor for detecting the distance, the apparatus (13) detects a central island (3) of a roundabout (1) located on the trajectory ahead of the motor vehicle (5) and triggers an action for avoiding a dangerous situation, wherein the apparatus (13) has an algorithm, which detects an edge of the central island (3) of the roundabout (1),
**characterised in that**,
the edge of the central island (5) is detected by the algorithm, by a plurality of points of a single horizontal scanning plane detected by a laser scanner (6), which are located on a particular circular segment, being combined to form a particular group, whereupon, when the particular group has a certain size, the algorithm attempts to detect a circular object (20, 21), which is identified as the central island (3).

10. Method according to claim 9, **characterised in that** at least one geometric parameter is detected by analysing data detected by the sensor and compared with stored data and/or modelled data in order to detect the central island (3) of the roundabout (1).

11. Method according to claim 10, **characterised in that**, a circular segment-shaped edge (10) of the central island (3) is used as the at least one geometric parameter.

## Revendications

1. Dispositif (13) pour la régulation de vitesse et de distance adaptative pour un véhicule automobile (5), avec un capteur pour la détection de la distance par rapport à un véhicule qui le précède, dans lequel le dispositif (13) est réalisé afin de réguler une vitesse réglée par une mise en prise dans une commande de moteur et/ou une commande de transmission et/ou une commande de système de freinage en tenant compte de la distance détectée, dans lequel le dispositif (13) est réalisé afin de détecter au moyen du capteur pour la détection de la distance un îlot central (3) se trouvant sur la trajectoire devant le véhicule automobile (5) d'un rond-point (1) et de déclencher une action pour éviter une situation dangereuse, dans lequel le dispositif (13) présente un algorithme qui est réalisé afin de détecter un bord de l'îlot central (3) du rond-point (1),
**caractérisé en ce**
**que** l'algorithme est réalisé afin de détecter le bord de l'îlot central (3) **en ce que** plusieurs points détectés par un scanner laser (6) d'un plan de scannage horizontal unique qui se trouvent sur un segment circulaire respectif, sont réunis en un groupe respectif, après quoi, lorsque le groupe respectif présente une certaine grandeur, l'algorithme essaie de reconnaître un objet circulaire (20, 21) qui est identifié comme l'îlot central (3).

2. Dispositif selon la revendication 1,
**caractérisé en ce**
**que** l'action déclenchée comporte l'émission d'une information ou d'un avertissement pour un conducteur.

3. Dispositif selon la revendication 1 ou 2,
**caractérisé en ce**
**que** l'action déclenchée comporte l'incitation à un conducteur d'entreprendre la commande du véhicule automobile (5).

4. Dispositif selon l'une des revendications précédentes,
**caractérisé en ce**
**que** l'action déclenchée comporte le freinage du véhicule automobile (5) à une vitesse permettant un passage du rond-point (1).

5. Dispositif selon l'une des revendications précédentes,
**caractérisé en ce**
**que** l'action déclenchée comporte le freinage du véhicule automobile (5) jusqu'à l'arrêt avant ou au niveau d'une ligne d'arrêt (12) du rond-point (1).

6. Dispositif selon l'une des revendications précédentes,
**caractérisé en ce**
**que** la détection de l'îlot central (3) du rond-point (1) comporte la détection d'au moins un paramètre géométrique et la comparaison du paramètre géométrique avec des données enregistrées et/ou des données modélisées.

7. Dispositif selon la revendication 6,
**caractérisé en ce que** l'au moins un paramètre géométrique est un bord (10) en forme de segment circulaire de l'îlot central (3).

8. Véhicule automobile (5) comprenant un dispositif (13) selon l'une des revendications 1 à 7.

9. Procédé pour le fonctionnement d'un dispositif (13) pour la régulation de vitesse et de distance adaptative pour un véhicule automobile (5), avec un capteur pour la détection de la distance par rapport à un véhicule qui le précède, dans lequel le dispositif (13) régule une vitesse réglée par une mise en prise dans une commande de moteur et/ou une commande de transmission et/ou une commande de système de freinage en tenant compte de la distance détectée, dans lequel le dispositif (13) détecte au moyen du capteur pour la détection de la distance un îlot central (3) se trouvant sur la trajectoire avant le véhicule automobile (5) d'un rond-point (1) et déclenche une action pour éviter une situation dangereuse, dans lequel le dispositif (13) présente un algorithme qui détecte un bord de l'îlot central (3) du rond-point (1), **caractérisé en ce**
**que** le bord de l'îlot central (5) est détecté par l'algorithme, **en ce que** plusieurs points détectés par un scanner laser (6) d'un plan de scannage horizontal unique qui se trouvent sur un segment circulaire respectif, sont réunis en un groupe respectif, après quoi, lorsque le groupe respectif présente une certaine grandeur, l'algorithme essaie de reconnaître un objet circulaire (20, 21) qui est identifié comme l'îlot central (3).

10. Procédé selon la revendication 9,
**caractérisé en ce**
**que** pour la détection de l'îlot central (3) du rond-point (1) au moins un paramètre géométrique est détecté par évaluation de données détectées par le capteur et est comparé avec des données enregistrées et/ou des données modélisées.

11. Procédé selon la revendication 10,
**caractérisé en ce**
**qu'**un bord en forme de segment circulaire (10) de l'îlot central (3) est utilisé comme l'au moins un paramètre géométrique.
